# EUROPÄISCHE PATENTSCHRIFT

(11) **EP 1 489 331 B1**
(45) Veröffentlichungstag und Bekanntmachung des Hinweises auf die Patenterteilung: **23.07.2008**
(21) Anmeldenummer: 04012152.7
(22) Anmeldetag: 21.05.2004
(51) Int. Cl.: F16D 69/02, C04B 35/573, C04B 41/51

(54) **Reibkörper aus metallinfiltriertem, mit Fasern verstärktem porösem Kohlenstoff**
Metal- infiltrated, fiber-reinforced porous carbon friction body
Corps de friction en carbone poreux renforcé par des fibres et infiltré de métal

(30) Priorität: 30.05.2003 DE 10324691
(43) Veröffentlichungstag der Anmeldung: 22.12.2004
(73) Patentinhaber: AUDI AG, 85045 Ingolstadt (DE)
(72) Erfinder: Hüner, Ronald Dr., 86674 Baar (DE); Rothmair, Xaver, 86368 Gersthofen (DE)
(74) Vertreter: Deckers, Hellmuth Alexander

(56) Entgegenhaltungen:
- EP-A- 1 357 310
- WO-A-98/42634
- DE-A- 19 727 585
- DE-C- 19 711 829

## Beschreibung

Die Erfindung betrifft Reibbeläge aus metallinfiltriertem, mit Fasern verstärktem porösem Kohlenstoff. Sie betrifft weiter ein Brems- oder Kupplungssystem aus mindestens einer Brems- oder Kupplungsscheibe, wobei die Brems- oder Kupplungsscheibe aus Metall, einem Metall-Keramik-Werkstoff oder aus mit Kohlenstofffasern verstärkter Keramik besteht, sowie mindestens einem Reibbelag, der aus einem Werkstoff aus metallinfiltriertem, mit Fasern verstärktem porösem Kohlenstoff besteht.

Brems- und Kupplungsbeläge sind meist organisch gebundene Materialien, oder sie bestehen aus Sintermetallen, die im allgemeinen in Kombination mit Brems- oder Kupplungsscheiben aus Gusseisen angewendet werden. Organische Materialien sind meist mit Phenolharzen gebunden, die sich ab 300 °C zersetzen und ab ca. 600 °C einen sehr schnellen thermischen Zersetzungsprozess durchlaufen. Solcherart gebundene Materialien sind wegen der höheren Temperaturen beim Bremsen und Kuppeln insbesondere in Verbindung mit Brems- oder Kupplungsscheiben aus keramischen Materialien nicht als "Lebensdauerbauteil" geeignet; vielmehr müssen sie während der Lebensdauer des betreffenden Fahrzeugs mehrfach erneuert werden.

Brems- oder Kupplungsscheibenmaterialien auf Basis von mit Kohlenstofffasern verstärkter Keramik haben durch den Anteil harter verschleißfester Keramik den Vorteil sehr hoher Lebensdauer und geringen Gewichts. Durch ihre geringere Wärmekapazität weisen Bremsscheiben aus diesen Materialien im Betrieb aber noch höhere Temperaturen als vergleichbare Scheiben aus Gusseisen auf, so dass organisch gebundene Bremsbeläge sehr schnell verschlissen werden.

Keramische Reibkörper haben eine hohe Härte. Reibpaarungen, in denen für die Reibbeläge Material ähnlicher Härte wie das der Brems- oder Kupplungsscheibe verwendet wird, haben den Nachteil, dass dadurch die Scheibe im gleichen Maß verschleißt wie die Reibbeläge; dies schließt eine Verwendung derartiger Bremsscheiben oder Kupplungsscheiben über die gesamte Betriebsdauer des diese enthaltenden Aggregate aus.

Aus dem Dokument DE 197 11829 C1 ist ein Verfahren bekannt zur Herstellung einer faserverstärkten Verbundkeramik mit hochwarmfesten Fasern auf der Basis Si, C, B, N, Al oder Verbindungen davon, die mit einer Matrix aus Silicium oder einer Siliciumlegierung reaktionsgebunden sind. Es handelt sich daher um ein Verbundmaterial mit Fasern auf der Basis der genannten Elemente als disperser Phase und einer Matrix aus Silizium oder Legierungen des Silicium, als kontinuierlicher Phase.

Das Dokument FR 2 758 146 A betrifft ein Verbundmaterial mit Verstärkungsfasern aus Kohlenstoff und einer gemischten Matrix, wobei diese Matrix einen Kohlenstoff enthaltenden Bestandteil und einen metallischen Bestandteil umfaßt. Die Materialien dieses Dokuments werden vorgeschlagen für den Gebrauch in Zusammenhang mit Anwendungen im Weltraum, bei denen es auf Dimensionsstabilität ankommt.

Aus der US-A 6,110,268 ist eine Bremseinheit bekannt, in der eine Bremsscheibe aus einem Carbon-Keramik-Verbundwerksioff mit einem Reibbelag auf Sintermetallbasis mit einem Reibwert von 0,3 bis 0,5 kombiniert wird. Diese Kombination hat den Nachteil, dass der Komfort dieser Reibpaarung aufgrund der hohen Härte und der Bremsgeräusche sehr gering ist. Die Möglichkeit, zusätzlich als Abrasive oder Schmierstoffe wirkende Zuschläge in die

Rezepturen einzufügen, ist aufgrund des Sinterprozesses begrenzt.

Demgegenüber besteht die Aufgabe darin, Werkstoffe für Reibbeläge bereitzustellen, die sowohl eine sehr viel höhere Verschleißfestigkeit besonders bei erhöhter Temperatur haben, die sich jedoch nicht negativ auf das Verschleißverhalten der damit kombinierten Brems- oder Kupplungsscheibe auswirkt, die auch eine höhere Kompressibilität als Sintermaterialien aufweisen und im Betrieb einen zwar geringen, aber höheren Verschleiß als die Reibschicht der Brems- oder Kupplungsscheibe zeigen. Die Zusammensetzung der Reibbeläge (Matrix, Verstärkungsfasern) soll variabel sein und sich auf den vorgesehenen Verwendungszweck in einfacher Weise anpassen lassen.

Diese Aufgabe wird gelöst durch einen Reibbelag aus einem mit Fasern verstärkten porösen Kohlenstoff-Werkstoff, in dem die Verstärkungsfasern in Form von Geweben, Kurzfasern und/oder Langfasern vorliegen, und dessen Poren durch Infiltration mit Metallen gefüllt sind, wobei der Werkstoff optional zusätzlich Schmierstoffe und/oder Abrasive enthalten kann.

Der Reibbelag enthält als Verstärkungsfasern insbesondere Kohlenstofffasern und/oder anorganische Fasern, bevorzugt aber Kohlenstofffasern. Diese können mit mindestens einer Schutzschicht aus Kohlenstoff überzogen sein, beispielsweise erzeugt durch Pyrolyse von auf den Fasern abgeschiedenen Harzen oder Pechen, Borverbindungen oder Phosphorverbindungen, Verbindungen, die Bor und Phosphor sowie gegebenenfalls dritte Elemente enthalten, oder Kombinationen hiervon. Der Reibbelag kann auch Siliciumcarbidfasern, Siliciumnitridfasern, Siliciumcarbid-Nitrid-Fasern sowie Fasern aus Verbindungen von Silicium, Bor, Kohlenstoff und Stickstoff in beliebigen Verhältnissen enthalten.

Als Kurzfasern werden Fasern mit einer Länge von bis zu 5 mm bezeichnet, Langfasern sind Fasern, deren Länge mindestens 5,1 mm beträgt, bevorzugt mindestens 6 mm und insbesondere mindestens 7,5 mm.

Der Massenanteil der Verstärkungsfasern in den erfindungsgemäßen Reibbelägen beträgt mindestens 10 %, bevorzugt 15 bis 60 %, und besonders bevorzugt 20 bis 55 %, bezogen auf die Masse des Reibbelags.

Die Matrix der erfindungsgemäßen Reibbeläge enthält im Fall von den sogenannten CFC-Werkstoffen ("carbon fibre reinforced carbon", CFRC) Kohlenstoff, weiter kann die Matrix anorganische Polymere enthalten, wie beispielsweise Polysilazane, substituierte Polysilazane, deren Substituenten bevorzugt Bor und/oder Phosphor und deren Zersetzungsprodukte sind, sowie Metalle.

Bevorzugt enthält die Matrix Massenanteile von 20 % bis 75 % Kohlenstoff und 25 % bis 80 % Metall. Besonders bevorzugt sind Massenanteile von 60 % bis 70 % Kohlenstoff und 30 % bis 40 % Metall, bezogen auf die Masse der Matrix.

Als Metalle werden bevorzugt Cu, Sn, Ti, Cr, Mo, V, Mg, Fe, Mn, Al, Ni, Zr, Hf, Co, besonders bevorzugt Cu und Sn sowie Metalle der Eisengruppe und Si enthaltende Legierungen. Dabei ist der Massenanteil von Silicium in den siliciumhaltigen Legierungen maximal 20 %, bevorzugt maximal 10 %, und insbesondere maximal 5 %, bezogen auf die Masse der Legierung.

Weitere Bestandteile können Abrasive in Partikelform wie SiO₂ (Massenanteil 1% bis 20 %), sowie Metallsilicide und Oxide (Massenanteil 0,5 % bis 20 %) sein, sowie schmierende

Bestandteile in Partikelform wie lamellares Bornitrid und Mangansulfid (Massenanteil jeweils 0,5 % bis 20 %). Bevorzugt ist in allen Fällen ein Bereich von Massenanteilen von jeweils 2 % bis 15 %, und insbesondere 5 % bis 10 %, bezogen auf die Masse der Reibbeläge.

Wesentlich für die Erfindung ist, dass sich nicht oder nur in untergeordnetem Maß durch Reaktion des Kohlenstoffs der Matrix oder der Fasern Carbide der Metalle bilden. Daher sind Carbide der zur Infiltration benutzten Metalle in dem erfindungsgemäßen Werkstoff maximal in einem Massenanteil von 10 %, bevorzugt 7 %, und insbesondere weniger als 5 % zugegen, bezogen auf die Masse des Werkstoffs.

Die Erfindung betrifft auch ein Verfahren zur Herstellung von Reibbelägen aus einem mit Kohlenstofffasern verstärkten porösen Kohlemstoff-Werkstoff, in dem die Verstärkungsfasern in Form von Geweben, Kurzfasern und Langfasern vorliegen, und dessen Poren ganz oder teilweise mit Metallen gefüllt sind, wobei zunächst Verstärkungsfasern oder Gewebe aus Verstärkungsfasern mit einer Formmasse, die gegebenenfalls Abrasive und/oder Schmierstoffe, sowie carbonisierbare Stoffe ausgewählt aus duro- und thermoplastischen Kunststoffen, Harzen und Pechen (gemeinsam auch "Binder" genannt) enthält, in der Wärme und/oder unter Druck zu Formteilen geformt werden. Diese Formung wird bevorzugt durch Pressen vorgenommen. Es ist bevorzugt, dass die Formmasse Verstärkungsfasern in Form von Geweben oder von Kurzfasern, Langfasern oder deren Mischungen enthält, wobei der Massenanteil dieser Verstärkungsfasern in der Formmasse bevorzugt 30 % bis 80 % beträgt, besonders bevorzugt 35 % bis 60 %. Die Formteile sind nach dem

Formungsvorgang im sogenannten Grünzustand, in dem sie leicht durch beispielsweise Schneiden oder Sägen bearbeitet werden können.

Als carbonisierbar werden solche Stoffe bezeichnet, die beim Erhitzen unter Ausschluss von Sauerstoff auf eine Temperatur von ca. 750 °C bis ca. 1100 °C Kohlenstoff bilden, wobei die Masse des gebildeten Kohlenstoffs mindestens 10 % der Masse des eingesetzten Stoffes beträgt.

Die Formteile im Grünzustand werden anschließend bei den oben angegebenen Temperaturen in einer nichtoxidierenden Atmosphäre zu porösen Körpern gebrannt. Diese porösen Körper enthalten die verstärkungsfasern sowie eine poröse Kohlenstoffmatrix, die sich durch die Carbonisierung des Binders während des Brennvorgangs bildet.

In einem weiteren Arbeitsschritt werden dann diese porösen Körper mit flüssigem Metall unter vermindertem Druck oder im Vakuum zur Bildung der erfindungsgemäßen Reibbeläge infiltriert. Die Temperatur für diesen Verfahrensschritt wird vorteilhafterweise so gewählt, dass sie mindestens ca. 10°C (10 K) über der Schmelztemperatur des zur Infiltration verwendeten Metalls oder der Legierung liegt. Andererseits soll die Temperatur so gewählt werden, dass die Bildung von Carbiden durch Reaktion des Kohlenstoffs der Matrix oder gegebenenfalls der Verstärkungsfasern mit dem zur Infiltration verwendeten Metall nicht oder nur in untergeordnetem Maß abläuft. Bei diesen Verfahrensschritten wird die äußere Form der Formteile weitgehend erhalten.

Die so hergestellten Reibbeläge können direkt die Form eines Reibbelags aufweisen oder aus einem mit Metall infiltrierten plattenförmigen Formkörper herausgesägt oder geschnitten werden. Günstiger ist die Bearbeitung im Grünzustand oder im carbonisierten Zustand vor der Infiltration mit dem Metall.

Werden Kohlenstofffasern in Form von Geweben eingesetzt, so sind diese so in den Reibbelägen aus den erfindungsgemäßen Werkstoffen orientiert, dass ihre Fläche vorzugsweise parallel zu der Reibfläche des Reibbelags ist. Bevorzugt sind mindestens 20 % der Flächen der Gewebe so ausgerichtet, dass ihre Fläche parallel zu den Reibflächen ist.

Die Erfindung wird durch die nachstehenden Beispiele erläutert.

### Beispiel 1

Eine Mischung aus Massenanteilen von 35 % Carbonfasern in Form von Kurzfasern mit einer mittleren Länge von 3 mm und einem Durchmesser von 8 bis 10 µm, 10 % Petrolkoks (Körnung mit einer Teilchengröße von bis zu 45 µm), 35 % Phenolharz (Novolak ®Bakelite SP 222), 1 % Bornitrid (Körnung Teilchengröße bis zu 45 µm), 4 % Graphit (Graphitbergbau Kaisersberg, Teilchengröße bis zu 45 µm), 10 % Pech (®Carbores, Kohlenstoffausbeute gemäß ISO 6998: 85 %, Rütgers VFT AG) und 5 % Al₂O₃ (Teilchengröße bis zu 10 µm, Alcoa) wurde in einem Mischer innig bei Raumtemperatur während zwanzig Minuten vermischt, diese Mischung wurde mit Hilfe einer hydraulischen Presse zu Platten mit einer Dicke von 20 mm verpresst und diese wurden danach in einem Ofen unter Luftabschluss fünf Stunden auf 700 °C erhitzt. Die resultierenden plattenförmigen Formteile wurden gemäß der gewünschten Endkontur bearbeitet, und bei 920 °C im Vakuum in flüssige Bronze getaucht. Dabei drang das flüssige Metall in die Poren des carbonisierten Formkörpers ein. Die Teile wurden aus der Metallschmelze genommen und abgekühlt. Die resultierenden Formteile wurden an einer Flachseite geschliffen und mit dieser Seite durch Kleben auf eine Trägerplatten aus Metall aufgebracht. Das aufgeklebte Formteil wurde anschließend planparallel zur vom Reibbelag abgewandten Seite des Trägers geschliffen.

### Beispiel 2

Eine Mischung aus Massenanteilen von 40 % Carbonfasern in Form von Kurzfasern mit einer mittleren Länge von 3 mm und einem Durchmesser von 8 bis 10 µm, 10 % Petrolkoks (Körnung mit einer Teilchengröße von bis zu 45 µm), 40 % Phenolharz (Novolak ®Bakelite SP 222), 10 % Pech (®Carbores, Kohlenstoffausbeute gemäß ISO 6998: 85 %, Rütgers VFT AG) wurde bei Raumtemperatur während zwanzig Minuten in einem Mischer innig vermischt. Diese Mischung wurde mit Hilfe einer hydraulischen Presse zu Platten mit einer Dicke von 20 mm verpresst und diese wurden danach in einem Ofen unter Luftabschluss fünf Stunden auf 900 °C erhitzt. Die resultierenden plattenförmigen Formteile wurden im flüssiges Pech getaucht und wiederum in einem Ofen unter Luftabschluss fünf Stunden auf 900 °C erhitzt und danach bei 920 °C im Vakuum in flüssige Bronze getaucht. Die Teile wurden aus der Metallschmelze genommen und abgekühlt und dann gemäß der gewünschten Endkontur bearbeitet. Die resultierenden Formteile wurden an einer Flachseite geschliffen und mit dieser Seite durch Kleben auf eine Trägerplatte aus Metall aufgebracht. Das aufgeklebte Formteil wurde anschließend planparallel zur vom Reibbelag abgewandten Seite des Trägers geschliffen.

### Beispiel 3

Eine Mischung aus Massenanteilen von 20 % Carbonfasern, 20 % Silicium-Carbonitrid-Fasern (Si₁₂C₄₀N₄₈) jeweils in Form von Kurzfasern mit einer mittleren Länge von 3 mm, 10 % Petrolkoks (Körnung mit einer Teilchengröße von bis zu 45 µm), 40 % Phenolharz (Novolak ®Bakelite SP 222), 10 % Pech (®Carbores, Kohlenstoffausbeute gemäß ISO 6998: 85 %, Rütgers VFT AG) wurde bei Raumtemperatur während zwanzig Minuten in einem Mischer innig vermischt. Diese Mischung wurde mit Hilfe einer hydraulischen Presse zu Platten mit einer Dicke von 20 mm verpresst und diese wurden danach in einem Ofen unter Luftabschluss fünf Stunden auf 900 °C erhitzt. Die resultierenden Formteile wurden an einer Flachseite geschliffen und mit dieser Seite durch Kleben auf eine Trägerplatten aus Metall aufgebracht, sodann bei 920 °C im Vakuum in flüssiges Ferrosilicium getaucht. Die Teile wurden aus der Metallschmelze genommen und abgekühlt und dann gemäß der gewünschten Endkontur bearbeitet. Das aufgeklebte Formteil wurde anschließend planparallel geschliffen.

Die Erprobung eines solchen nach Beispiel 1 hergestellten Reibmaterials ergab in einer AK-Master Prüfung (Stand 12/98) in Kombination mit einer Carbon-Keramik-Bremsscheibe einen Verschleiß von 6,4 g an den Reibbelägen, während ein unter den gleichen Bedingungen durchgeführter Versuch mit herkömmlichen, mit Phenolharz gebundenen Reibbelägen einen Verschleiß von 40,5 g ergab.

## Patentansprüche

1. Reibbelag für Brems- oder Kupplungssysteme aus einem mit Fasern verstärkten porösen Kohlenstoff-Werkstoff, in dem die Verstärkungsfasern in Form von Geweben, Kurzfasern und/oder Langfasern vorliegen, und dessen Poren mit Metallen gefüllt sind, wobei in dem Werkstoff Carbide der die Poren füllenden Metalle maximal in einem Massenanteil von 10 % enthalten sind, bezogen auf die Masse des Reibkörpers, und wobei die Metalle ausgewählt sind aus Cu, Sn, Ti, Cr, Mo, V, Mg, Fe, Mn, Al, Ni, Zr, Hf, Co sowie deren Legierungen.

2. Reibbelag nach Anspruch 1, **dadurch gekennzeichnet, dass** der Massenanteil an Verstärkungsfasern mindestens 10 % beträgt, bezogen auf die Masse des Reibbelags;

3. Reibbelag nach Anspruch 1, **dadurch gekennzeichnet, dass** die Verstärkungsfasern Kohlenstofffasern umfassen.

4. Reibbelag nach Anspruch 1, **dadurch gekennzeichnet, dass** die Verstärkungsfasern anorganische Fasern ausgewählt aus Siliciumcarbidfasern, Siliciumnitridfasern, Siliciumcarbid-Nitrid-Fasern sowie Fasern aus Verbindungen von Silicium, Bor, Kohlenstoff und Stickstoff in beliebigen Verhältnissen umfassen.

5. Reibbelag nach Anspruch 1, **dadurch gekennzeichnet, dass** die Matrix des Kohlenstoff-Werkstoffs Metalle enthält ausgewählt aus Cu, Sn, Fe, Ni, Co sowie deren Legierungen.

6. Reibbelag nach Anspruch 1, **dadurch gekennzeichnet, dass** in dem Werkstoff Schmierstoffe in Partikelform in einem Massenanteil von 0,5 % bis zu 20 % enthalten sind, bezogen auf die Masse des Reibbelags;

7. Reibbelag nach Anspruch 1, **dadurch gekennzeichnet, dass** in dem Werkstoff Abrasive in Partikelform in einem Massenanteil von 0,5 % bis zu 20 % enthalten sind, bezogen auf die Masse des Reibbelags.

8. Verfahren zur Herstellung von Reibbelägen gemäß Anspruch 1, **dadurch gekennzeichnet, dass**
- im ersten Schritt eine Formmasse hergestellt wird durch Mischen von carbonisierbaren Stoffen ausgewählt aus duro- und thermoplastischen Kunststoffen, Harzen und Pechen sowie Verstärkungsfasern in Form von Geweben oder von Kurzfasern, Langfasern oder deren Mischungen, wobei der Massenanteil dieser Verstärkungsfasern in der Formmasse 30% bis 80 % beträgt,
- im zweiten Schritt aus der Formmasse durch Verformen in der Wärme und/oder unter Druck ein Formteil geformt wird,
- im dritten Schritt das Formteil durch Erwärmen unter Ausschluss von oxidierenden Gasen bei einer Temperatur von ca. 750 °C bis ca. 1100 °C zu einem porösen Körper gebrannt wird, der Verstärkungsfasern sowie eine poröse Kohlenstoffmatrix enthält, die sich durch die Carbonisierung während des Brennvorgangs bildet, und
- im vierten Schritt der poröse Körper mit flüssigem Metall unter vermindertem Druck oder im Vakuum infiltriert wird, wobei die Infiltrationstemperatur so gewählt wird, daß sie mindestens 10 K über der Schmelztemperatur des zur Infiltration verwendeten Metalls oder der Legierung liegt, und dass die Bildung von Carbiden mit dem zur Infiltration verwendeten Metall nicht oder nur in untergeordnetem Maß abläuft.

9. Verfahren nach Anspruch 8, **dadurch gekennzeichnet, dass** zu der Formmasse Abrasive und/oder Schmierstoffe zugemischt werden.

10. Bremssysteme enthaltend Reibbeläge gemäß Anspruch 1.

11. Kupplungssysteme enthaltend Reibbeläge gemäß Anspruch 1.

## Claims

1. A friction lining for brake or clutch systems comprising a fiber-reinforced porous carbon material in which the reinforcing fibers are present in the form of woven fabrics, short fibers and/or long fibers and whose pores have been filled with metals, wherein carbides of the metals filling the pores are present in the material in a mass fraction of not more than 10 %, based on the mass of the friction body, and the metals are selected from among Cu, Sn, Ti, Cr, Mo, V, Mg, Fe, Mn, Al, Ni, Zr, Hf, Co and alloys thereof.

2. The friction lining as claimed in claim 1, wherein the mass fraction of reinforcing fibers is at least 10 %, based on the mass of the friction lining.

3. The friction lining as claimed in claim 1, wherein the reinforcing fibers comprise carbon fibers.

4. The friction lining as claimed in claim 1, wherein the reinforcing fibers comprise inorganic fibers selected from among silicon carbide fibers, silicon nitride fibers, silicon carbonitride fibers and fibers of compounds of silicon, boron, carbon and nitrogen in any ratios.

5. The friction lining as claimed in claim 1, wherein the matrix of the carbon material comprises metals selected from among Cu, Sn, Fe, Ni, Co and alloys thereof.

6. The friction lining as claimed in claim 1, wherein lubricants in particle form are present in the material in a mass fraction of 0.5 % to 20 %, based on the mass of the friction lining.

7. The friction lining as claimed in claim 1, wherein abrasives in particle form are present in the material in a mass fraction of 0.5 % to 20 %, based on the mass of the friction lining.

8. A process for producing friction linings as claimed in claim 1, which comprises
in a first step, producing a molding composition by mixing carbonizable materials selected from among thermoset and thermoplastic polymers, resins and pitches with reinforcing fibers in the form of woven fabrics or of short fibers, long fibers or mixtures thereof, where the mass fraction of these reinforcing fibers in the molding composition is from 30 % to 80 %,
in a second step, producing a shaped part from the molding composition by molding at elevated temperature and/or under pressure,
in a third step, firing the shaped part by heating at a temperature of from about 750 C to about 1100 C in the absence of oxidizing gases to produce a porous body comprising reinforcing fibers and a porous carbon matrix which is formed by carbonization during the firing process, and
in a fourth step, infiltrating the porous body with liquid metal under reduced pressure or in vacuo, where the infiltration temperature is selected so that it is at least 10 K above the melting point of the metal used for infiltration or the alloy and the formation of carbides with the metal used for infiltration does not occur or occurs to only a minor extent.

9. The process as claimed in claim 8, wherein abrasives and/or lubricants are mixed into the molding composition.

10. A brake system comprising The friction lining as claimed in claim 1.

11. A clutch system comprising The friction lining as claimed in claim 1.

## Revendications

1. Garniture de friction pour systèmes de freinage ou d'embrayage constituée d'un matériau carboné poreux renforcé par des fibres, lesquelles fibres de renforcement se présentent sous la forme de tissus, de fibres courtes et/ou de fibres longues, et dont les pores sont remplis de métaux, les carbures des métaux remplissant les pores étant présents dans le matériau au maximum en fraction massique de 10 % par rapport à la masse du corps de friction et les métaux étant choisis dans le groupe constitué de Cu, Sn, Ti, Cr, Mo, V, Mg, Fe, Mn, AI, Ni, Zr, Hf, Co ainsi que de leurs alliages.

2. Garniture de friction selon la revendication 1, **caractérisée en ce que** la fraction massique de fibres de renforcement représente au moins 10 % par rapport à la masse de la garniture de friction.

3. Garniture de friction selon la revendication 1, **caractérisée en ce que** les fibres de renforcement comprennent des fibres de carbone.

4. Garniture de friction selon la revendication 1, **caractérisée en ce que** les fibres de renforcement comprennent des fibres inorganiques choisies parmi les fibres de carbure de silicium, les fibres de nitrure de silicium, les fibres de carbonitrure de silicium ainsi que les fibres de composés de silicium, de bore, de carbone et d'azote dans des rapports quelconques.

5. Garniture de friction selon la revendication 1, **caractérisée en ce que** la matrice du matériau carboné contient des métaux choisis dans le groupe constitué de Cu, Sn, Fe, Ni, Co ainsi que de leurs alliages.

6. Garniture de friction selon la revendication 1, **caractérisée en ce que** des lubrifiants sont contenus dans le matériau sous forme particulaire en fraction massique de 0,5 % à 20 % par rapport à la masse de la garniture de friction.

7. Garniture de friction selon la revendication 1, **caractérisée en ce que** des abrasifs sont contenus dans le matériau sous forme particulaire en fraction massique de 0,5 % à 20 % par rapport à la masse de la garniture de friction.

8. Procédé de fabrication de garnitures de friction selon la revendication 1, **caractérisé en ce que**,
au cours de la première étape, on fabrique une masse de moulage en mélangeant des substances carbonisables choisies parmi les matériaux synthétiques duroplastiques et thermoplastiques, les résines et les poix ainsi que des fibres de renforcement sous la forme de tissus ou de fibres courtes, de fibres longues ou de leurs mélanges, la fraction massique de ces fibres de renforcement représentant 30 % à 80 % de la masse de moulage,
au cours de la deuxième étape, on forme une pièce moulée à partir de la masse de moulage par façonnage à la chaleur et/ou sous pression,
au cours de la troisième étape, on cuit la pièce moulée par chauffage en excluant les gaz oxydants à une température d'environ 750 °C à environ 1100 °C sous la forme d'un corps poreux, qui contient des fibres de renforcement ainsi qu'une matrice de carbone poreuse, qui se forme par carbonisation pendant l'opération de cuisson, et,
au cours de la quatrième étape, on infiltre le corps poreux de métal liquide sous pression réduite ou sous vide, la température d'infiltration étant choisie de sorte qu'elle se situe au moins 10 K au-dessus de la température de fusion du métal utilisé pour l'infiltration ou de l'alliage et de sorte que la formation de carbures ne se produise pas ou seulement dans une moindre mesure avec le métal utilisé pour l'infiltration.

9. Procédé selon la revendication 8, **caractérisé en ce que** l'on mélange des abrasifs et/ou des lubrifiants à la masse de moulage.

10. Systèmes de freinage contenant des garnitures de friction selon la revendication 1.

11. Systèmes d'embrayage contenant des garnitures de friction selon la revendication 1.
